(19) Europäisches Patentamt

European Patent Office

Office européen des brevets

(11) **EP 0 473 122 B2**

(12) **NEW EUROPEAN PATENT SPECIFICATION**

(45) Date of publication and mention
of the opposition decision:
**08.12.2004   Bulletin 2004/50**

(45) Mention of the grant of the patent:
**02.04.1997   Bulletin 1997/14**

(21) Application number: **91114388.1**

(22) Date of filing: **27.08.1991**

(51) Int Cl.$^7$: **C22F 1/057**, C22C 21/16
// B32B15/01

(54) **Method of producing an aluminium base alloy sheet product**

Verfahren zur Herstellung von Blech aus einer Aluminiumlegierung

Procédé de production d'une tole en alliage d'aluminium

(84) Designated Contracting States:
**CH DE ES FR GB IT LI NL**

(30) Priority: **27.08.1990  US 572625**
**27.08.1990  US 572626**

(43) Date of publication of application:
**04.03.1992   Bulletin 1992/10**

(73) Proprietor: **Alcoa Inc.**
**Pittsburgh, PA 15212-5858 (US)**

(72) Inventors:
• **Colvin, Edward L.**
**Pittsburgh, Pennsylvania 15238 (US)**
• **Petit, Jocelyn I.**
**New Kensington, Pennsylvania 15068 (US)**
• **Westerlund, Robert W.**
**Bettendorf, Iowa 52722 (US)**

(74) Representative: **Bergen, Klaus, Dipl.-Ing. et al**
**Patentanwalt,**
**Postfach 11 01 23**
**40501 Düsseldorf (DE)**

(56) References cited:
• **"Metals Handbook", vol. 2, "Properties and selections: nonferrous alloys and pure metals", 9th edition, 1979, pages 50,72-75, American Society for Metals, Metals Park, Ohio, US**
• **J.E. HATCH: "Aluminium", vol. 1, "Properties and physical metallurgy", 1st edition, 1984, pages 267-267,361-365,372-374, American Society for Metals, Metals Park, Ohio, US**
• **M.V. Hyatt "Program to improve the fracture toughness and fatigue resistance of aluminium sheet and plate for airframe applications", Technical Report AFML-TR-73-224, Septembre 1973**
• **J.T. Staley "Microstructure and Toughness of High-Strength Aluminium Alloys" in "Properties Related to Fractrure Toughness", ASTM STP 605, AmericanSociety for Testing and Materials, 1976, pp. 71-103**
• **Proceedings of the First International Conference on Fracture, Sendai, Japan, Vol.2, pp. 995-1038, 12-17 September, 1964, Carman et al.**
• **Proceedings of International Conference on Recent Advances in Science and Engineering of Light Metals, The Japan Institute of Light Metals, Tokio, October 1991, pp. 273-280, Hyatt et al.**
• **Metals Handbook, 9th Ed., Vol.4, 1981, pp. 667, 681**
• **Altenpohl,"Aluminium und Aluminiumlegierungen", Springer Verlag, 1965, pp.718, 719, 744-747**

**Description**

This invention relates to a method for producing an aluminum alloy sheet product having a cladding of aluminum and suitable for use in aircraft applications and having improved resistance to fatigue crack growth and fracture toughness and suited to use as aircraft skin.

The design of commercial aircraft requires different sets of properties for different types of structures on the airplane. In many parts, resistance to crack propagation either in the form of fracture toughness or fatigue crack growth is essential. Therefore, many significant benefits can be realized by improving fracture toughness and fatigue crack propagation.

A new material with improved toughness, for example, will have a higher level of damage tolerance. On the aircraft, this translates to improved safety for passengers and crew and weight savings in the structure which allows for improved fuel economy, longer flight range, greater payload capacity or a combination of these.

Cyclic loading occurs on a commercial jet airplane during the take off/landing when the interior of the airplane is pressurized. Typically, airplanes may see up to 100,000 pressurization cycles during their normal service lifetime. Thus, it will be noted that great benefit is derived from improved fracture toughness and resistance to fatigue crack growth, both of which are related to cyclic loading.

The present invention as defined in claim 1.

Preferred embodiments of the claimed method are given in the dependent claims.

EP-A-0 038 605 discloses a method of producing a 2000 series aluminum alloy having high strength, high fatigue resistance and high fracture toughness for aircraft structural components. Plate products are produced from a cast 2000 series aluminum alloy which is hot worked, solution heat treated at a temperature on the order of 920°F., quenched, preaged, cold rolled, stretched and naturally aged.

GB-A-1 122 912 discloses improving the short transverse properties of 2000 series aluminum alloy plate by hot working an ingot prior to hot rolling.

U.S. Patent 4,336,075 discloses the use of AA2000 type aluminum alloy for aircraft wings.

The present invention provides aluminum base alloy sheet products and a method of fabricating sheet products from a body of the alloy. Further, the invention provides aluminum alloy sheet products suitable for aircraft applications such as wing skins and aircraft fuselage panels, which sheets may be clad with a corrosion protecting outer layer.

A principal object of the invention is to provide a method for producing an aluminum alloy sheet product having a cladding of aluminum and having improved fracture toughness and resistance to fatigue crack growth while maintaining high strength properties and corrosion resistance.

These and other objects will become apparent from a reading of the specification and claims and an inspection of the claims appended hereto.

In accordance with these object, there is provided a method of producing a sheet product having improved levels of toughness and fatigue crack growth resistance while maintaining high strength, the metho comprising providing a body of an aluminum base alloy containing 4.1 to 4.5 wt.% Cu, 1.2 to 1.45 wt. % Mg, 0.4 to 0. wt.% Mn, 0.12 wt.% max. Fe, 0.1 wt.% max, Si, the remainder aluminum, incidental elements and impurities. The method further comprises heating a body of the alloy to above 488°C (910°F) to dissolve soluble constituents. There after, the body is hot rolled in the range of about 315 to 482°C (600 to 900°F), solution heat treated for a time of less than about 15 minutes, for example, at the solution heat treating temperature, then rapidly cooled and naturally aged to provide a sheet product with improved levels of fatigue crack growth resistance and fracture toughness while main taining high strength levels.

Figure 1 shows fracture toughness plotted against yield strength of improved material processed in accordance with the invention.

Figure 2 is a graph showing fatigue crack growth rate plotted against crack length for Aluminum Association alloy 2024 in the solution heat treated, cold worked and naturally aged T3 temper (AA2024-T3) and the improved produc in accordance with the invention.

Figure 3 is a differential calorimetry curve of 2024-T3.

Figure 4 is a differential calorimetry curve of an aluminum alloy product in accordance with the invention.

As noted, the alloy of the present invention comprises 4.0 to 4.5 wt.% Cu, 1.2 to 1.5 wt.% Mg, 0.4 to 0.7 wt. % Mn, 0.02 to 0.5 wt.% Fe, 0.001 to 0.5 wt.% Si, the balance aluminum, incidental elements and impurities. Impurities are referably limited to 0.05% each and the combination of impurities preferably should not exceed 0.15%. The sum total of incidental elements and impurities preferably does not exceed 0.45%.

A preferred alloy would contain, 4.1 to 4.4 wt.% Cu, 1.2 to 1.45 wt.% Mg, 0.4 to 0.6 wt.% Mn, 0.1 wt.% max. Fe, 0.1 wt.% max. Si, the balance aluminum, incidental elements and impurities. Elements such as Zn preferably have a maximum of 0.2 wt.% and Cr 0.2 wt.% and 0.5 wt.% Zr, with a range for Zr being 0.05 to 0.25 wt.%, if it desired to make an unrecrystallized product. By unrecrystallized is meant that no more than 20 vol.% of the product is recrystallized. A typical alloy composition would contain about 4.25 wt.% Cu, 1.35 wt.% Mg, 0.5 wt.% Mn, 0.12 wt.% max. Fe and 0.1 wt.% max. Si with Fe plus Si not totaling more than 0.20 and preferbly not more than 0.15.

Mn contributes to or aids in grain size control during operations that cause the metal to recrystallize. Very large grains are detrimental to properties such as fracture toughness, formability and corrosion resistance.

Fe and Si levels are kept low to limit formation of the constituent phases $Al_7Cu_2Fe$ and $Mg_2Si$ which are detrimental to fracture toughness and fatigue crack growth resistance. These phases have low solubility in Al-alloy and once formed cannot be eliminated by thermal treatments. Formation of $Al_7Cu_2Fe$ and $Mg_2Si$ phases can also lower the strength of the product because their formation reduces the amount of Cu and Mg available to form strengthening precipitates. Constituents such as $Al_7Cu_2Fe$ and $Mg_2Si$ are particularly important to avoid because they cannot be dissolved; thus, iron is kept to a very low level to avoid such constituents. That is, a decrease in Fe and Si increases toughness and resistance to fatigue crack growth. Thus, in the present invention, it is preferred to control Fe to below 0.10 wt.% and below 0.10 wt.%.

. Cu and Mg must be carefully controlled to maintain good strength while providing the benefits in toughness and fatigue. The Cu and Mg levels must be low enough to allow for dissolution of the slightly soluble $Al_2CuMg$ and $Al_2Cu$ constituent phases during high temperature processing yet high enough to maximize the amount of free Cu and Mg available to form the strengthening precipitate phases. This leaves a very narrow range of Cu and Mg compositions which will produce the desired properties in the final product.

The following equations may be used to estimate the "free Cu" and "free Mg"; that is, the amount of Cu and Mg that is available to form strengthening phases.

$$Cu_{Free}=Cu_{Total}-2.28Fe-0.74(Mn-0.2)$$

$$Mg_{Free}=Mg_{Total}-1.73(Si-0.05)$$

As well as providing the alloy product with controlled amounts of alloying elements as described herein, it is preferred that the alloy be prepared according to specific method steps in order to provide the most desirable characteristics of both strength, fracture toughness, corrosion resistance and resistance to fatigue crack growth as required, for example, for use as aircraft skins or panels. The alloy as described herein can be provided as an ingot or slab for fabrication into a suitable wrought product by casting techniques currently employed in the art for cast products with continuous casting being preferred. Slabs resulting from belt casters or roll casters also may be used.

The ingot or slab of the alloy of the invention is provided with a cladding and then processed in accordance with the invention. Such clad products utilize a core of the aluminum base alloy of the invention and a cladding of higher purity alloy which corrosion protects the core. The cladding includes essentially unalloyed aluminum or aluminum containing not more than 0.1 or 1% of all other elements. However, Zn can be present as in AA7072, for example. Thus, the cladding on the core may be selected from Aluminum Association alloys 1100, 1200, 1230, 1135, 1235, 1435, 1145, 1345, 1250, 1350, 1170, 1175, 1180, 1185, 1285, 1188, 1199 or 7072.

The alloy stock may be homogenized prior to hot working or it may be heated and directly hot rolled. If homogenization is used, it may be carried out at a metal temperature in the range of 488 or 493°C to 515 or 538°C (910 or 920°F to 960 or 1000°F) for a period of time of at least 1 hour to dissolve soluble elements and to homogenize the internal structure of the metal. A preferred time period is about 4 hours or more in the homogenization temperature range. Normally, the soak time at the homogenizing temperature does not have to extend for more than 8 hours, however, longer times are not normally detrimental, 4 to 6 hours at the homogenization temperature has been found to be quite suitable. A typical homogenization temperature is 493°C (920°F).

For purposes of the present invention, it is preferred to hot roll the clad ingot without homogenizing. Thus, the ingot is hot worked or hot rolled to provide an intermediate gauge product. Hot rolling is performed wherein the starting temperature for rolling is in the range of 315 to 482°C (600 to 900°F). When the use of the alloy is for aircraft wing skins or fuselage skins, for example, the hot rolling is performed to provide an intermediate product having a thickness of about 7.6 to 20.3 cm (3 to 8 inches).

After hot rolling, the intermediate gauge product is subjected to a reheating step. It is this reheating *step* which is so important to the present invention, particularly with respect to minimizing or avoiding soluble constituent or secondary phase particles and their adverse effect on fatigue crack growth resistance and fracture toughness. Thus, in the reheating step, the intermediate gauge product is heated to a temperature of above 488 or 493°C (910 or 920°F), e.g., above the solvus temperature of secondary phase particles, to dissolve soluble constituents that remain from casting or may have precipitated during the hot rolling. Such constituent particles include $Al_2CuMg$, $Al_2Cu$, for example. The reheating has the effect of putting most of the Cu and Mg into solid solution. The heating can be in the range of 488 to 507°C (910 to 945°F) with a preferred range being 488 to 499°C higher than (910 to 930°F). For purposes of reheating, the intermediate gauge product can be held for about 1 to 40 hours when the metal is in the temperature range or above the solvus temperature for the soluble constituents. Preferably, times at metal temperature are in the range of 4 to 24 hours. It is important that the reheat is carefully controlled within the parameters set forth. If the reheating operation is lower than 482°C (900°F), for example, 454°C (850°F), this can leave large volumes of coarse undissolved $Al_2CuMg$ and $Al_2Cu$ particles, for example, which particles can have an adverse effect on the fatigue crack growth resistance in the final product. In fact, if the reheat is below the solvus temperature, these particles can even grow in size. It is the presence of such constituent particles which can limit crack propagation resistance in the final sheet product.

In clad products, the temperature and duration of the reheat is very important for another reason. That is, if the time at reheat temperature is excessive, copper can diffuse into the higher purity aluminum cladding which can detrimentally affect the corrosion protection afforded by the cladding.

After the reheat, the intermediate product is subjected to a second hot rolling operation. The second hot rolling operation is performed in the temperature range of about 315 to 482°C (600 to 900°F). The hot rolling may be performed to a final gauge, e.g. 6.35 mm (0.25 inch) or less. Alternatively, the hot rolling step can be performed to provide a second intermediate product having a thickness in the range of 2.5 to 7.6 mm (0.1 to 0.3 inch). Thereafter, the second intermediate product can be cold rolled to a final gauge of 6.35 mm (0.25 inch) or less, typically in the range of 1.27 to 5.1 mm (0.05 to 0.20 inch), to produce a substantially recrystallized product. An intermediate anneal may be used before cold rolling, if desired.

After cold rolling, the sheet product is then subjected to a solution heat treatment in the range of 488 to 507°C (910 to 945°F). It is important that the solution heat treatment be carefully controlled in duration. Thus, the solution heat treatment can be accomplished in 5 minutes or even less when the metal has reached the solution temperature. The time can be extended to 15 minutes or even 60 minutes. However, in clad product, care should be taken against diffusion of copper into the cladding and possible problems resulting therefrom.

Solution heat treatment in accordance with the present invention may be performed on a continuous basis. Basically, solution effects can occur fairly rapidly. In continuous treating, the sheet is passed continuously as a single web through an elongated furnace which greatly increases the heat-up rate. Long solution heat treat times may be used to dissolve the soluble constituents such as $Al_2CuMg$ and $Al_2Cu$. However, long time (more than 2 hours) solution heat treatments should not be used on clad products because of the excessive Cu diffusion that can occur in the cladding. The continuous approach facilitates practice of the invention since a relatively rapid heat-up and short dwell time at solution temperature result in minimizing copper dissolution into the cladding. Accordingly, the inventors contemplate solution heat treating in as little as about 10 minutes, or less, for instance about 0.5 to 4 minutes. As a further aid to achieving a short heat-up time, a furnace temperature or a furnace zone temperature significantly above the desired metal temperatures provides a greater temperature head useful to speed heat-up times.

After solution heat treatment, it is important that the metal be rapidly cooled to prevent or minimize the uncontrolled precipitation of secondary phases, e.g., $Al_2CuMg$ and $Al_2Cu$. Thus, it is preferred in the practice of the invention that the quench rate be at least 55.6 °C/sec (100°F/sec) from solution temperature to a temperature of 177°C (350°F) or lower. A preferred quench rate is at least 166.8°C/sec (300°F/sec) in the temperature range of 496°C (925°F) or more to 177°C (350°F) or less. Suitable rates can be achieved with the use of water, e.g., water immersion or water jets. Further, air or air jets may be employed. Preferably, the quenching takes place on a continuous basis. The sheet may be cold worked, for example, by stretching up to 10% of its original length. Typically, cold working or its equivalent which products an effect similar to stretching, may be employed in the range of 0.5% to 6% of the products' original length.

After rapidly quenching, the sheet product is naturally aged. By natural aging is meant to include aging at temperatures up to 79°C (175°F).

Conforming to these controls greatly aids the production of sheet stock having high yield strength, improved levels of fracture toughness, increased resistance to fatigue crack growth and high resistance to corrosion, particularly using the alloy composition of the invention. That is, sheet can be produced having a minimum long transverse yield strength of 276 or 290 MPa (40 or 42 ksi), suitably minimum 303, 317 or 331 MPa (44, 46 or 48 ksi), and a minimum fracture toughness of 127, 132 or 137 MPa $\sqrt{m}$ (140, 145 or 150 ksi $\sqrt{in}$). Also, the sheet has a fatigue crack growth rate of $2.5 \times 10^{-4}$ cm ($10^{-4}$ inches) per cycle at a minimum cyclic stress intensity range of 20 MPa $\sqrt{m}$ (22 ksi $\sqrt{in}$).

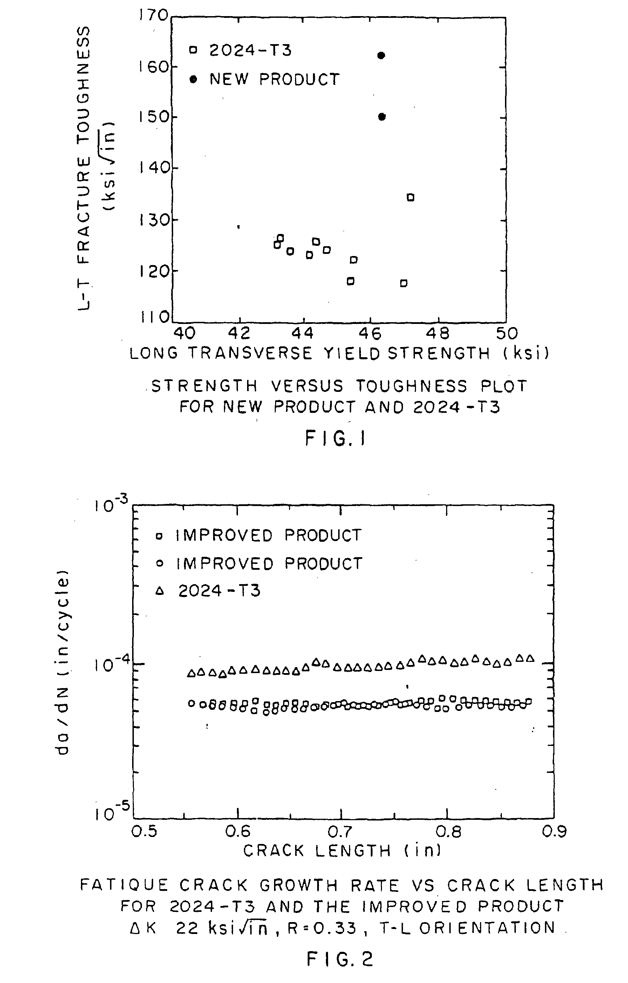

Sheet fabricated in accordance with the invention has the advantage of maintaining relatively high yield strength, e.g., about 324 MPa (47 ksi), while increasing fracture toughness to about 137 to 150 MPa $\sqrt{m}$ (150 to 165 ksi $\sqrt{in}$). Fracture toughness of the product in terms of measurements stated as K apparent (K app) using 40 cm (16 inch) wide panel can range from 80 or 82 to 91 MPa $\sqrt{m}$ (88 or 90 to 100 ksi $\sqrt{in}$). As shown in Figure 2, the new product has considerably better resistance to fatigue crack propagation than existing fuselage skin alloys in tests conducted using a constant cyclic stress intensity factor range of 2.0 MPa $\sqrt{m}$ (22 ksi $\sqrt{in}$). This cyclic stress intensity factor range is important for the damage tolerant design of transport airplanes such as commercial airliners.

Sheet material of the invention is characterized by a substantial absence of secondary phase particles, e.g., $Al_7Cu_2Fe$, $Al_6(Fe, Mn)$ $Al_2CuMg$ and $Al_2Cu$ particles. That is, sheet material of the invention has generally less than 1.25 vol.% of such particles larger than 0.15 square $\mu$m as measured by optical image analysis through a cross section of the product.

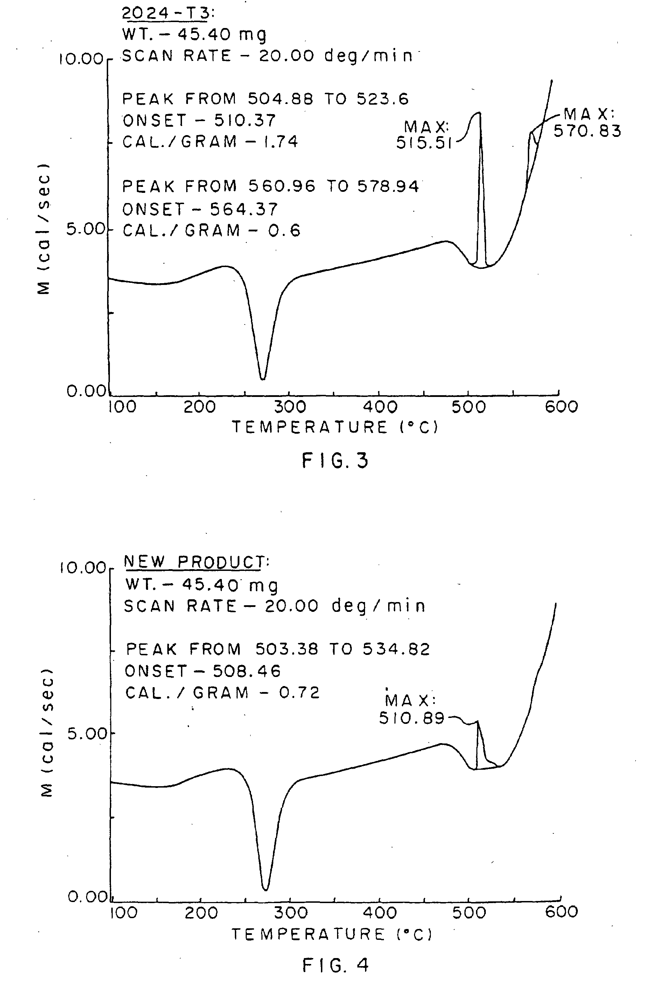

That is, sheet material of the invention generally has a 500 to 530°C differential scanning calorimetry peak of less than 1.0 cal/gram. Figures 3 and 4 show a comparison between the new product and 2024-T3 which is the current material of choice for the fuselage skins of commercial jet aircraft.

Example

A 40 x 152 cm (16 x 60 inch) ingot having the composition 4.28% Cu, 1.38% Mg, 0.50% Mn, 0.07% Fe, 0.05% Si, balance Al was clad with AA1145 then heated to approximately 468°C (875°F) and hot rolled to a slab gauge of 11.4 cm (4.5 inches). The slab was then heated to a temperature above 488°C (910°F) for 17 hours and hot rolled to a gauge of 4.5 mm (0.176 inch). The metal was cold rolled to a final gauge of 2.5 mm (0.100 inch) before solution heat treating for 10 minutes at 496°C (925°F) and stretching 1 to 3%. The sheet was aged for 3 weeks at room temperature.

For comparison, 2024-T3, which is currently used for the fuselage skins of commercial jet airliners, having the composition 4.6% Cu, 1.5% Mg, 0.6% Mn, 0.2% Fe, 0.2% Si, balance Al, was processed the same except it was not subjected to reheating at 488°C (910°F).

The product of the invention had a 16% higher plane stress fracture toughness ($K_C$ = 142 MPa $\sqrt{m}$ (156.5 ksi $\sqrt{in}$) average of new product data of Fig. 1 versus 123 MPa $\sqrt{m}$ (134.7 ksi $\sqrt{in}$) average of highest two points of 2024-T-3 data of Fig. 1) and at a cyclic stress intensity range of 20 MPa $\sqrt{m}$ (22 ksi $\sqrt{in}$) the cracks grew 44% slower (da/dN=13.5 $\times$ $10^{-5}$ cm ($5.3x10^{-5}$ in)/cycle versus 24.2 x $10^{-5}$ cm ($9.52x10^{-5}$ in)/cycle as shown in the table below. One possible explanation of the metallurgical causes of the improvement can be seen in Figures 3 and 4 which show differential scanning calorimetry curves. The size of the sharp peak that occurs in the temperature range of 500 to 530°C (Fig. 3) is indicative of the amount of constituent phase or phases such as $Al_2CuMg$ and $Al_2Cu$ present. These phases contribute to the lowering of fracture toughness and resistance to fatigue crack growth. The new product (Fig. 4) has a much smaller peak indicating that the volume fraction of such constituent has been significantly reduced in accordance with the present invention.

The volume fraction of total large constituent phase particles (including Fe and Si bearing particles), e.g., larger than 0.15 square $\mu$m, was much smaller for the new product than for the conventionally treated 2024-T3. In twelve measurements, the new product volume fraction ranged from 0.756% to 1.056%. In twelve measurements, the conventionally treated 2024-T3 constituent volume fraction ranged from 1.429% to 2.185%.

| Fatigue Crack Propagation at Different Cyclic Stress Intensity Ranges | | | |
|---|---|---|---|
| Sample | ΔK | da/dN | |
| | | (inch) | cm |
| New Product | 10 | $6.70x10^{-6}$ | $17.0x10^{-6}$ |
| | 22 | $5.30x10^{-5}$ | $13.5x10^{-5}$ |
| | 30 | $1.34x10^{-4}$ | $3.4x10^{-4}$ |
| 2024-T3 | 10 | $7.91x10^{-6}$ | $20.1x10^{-6}$ |
| | 22 | $9.52x10^{-5}$ | $24.2x10^{-5}$ |
| | 30 | $3.71x10^{-4}$ | $9.4x10^{-4}$ |
| ΔK=Cyclic Stress Intensity Factor Range da/dN=Length of crack growth during one load/unload cycle Test performed with a R-ratio (min. load/max. load) equal to 0.33. | | | |

Fracture toughness was measured using a 40 cm (16-inch) wide, 11B cm (44-inch) long panel. All values given were taken in the T-L orientation which means that the applied load was parallel to the transverse direction of the sheet and the crack propagated parallel to the longitudinal direction of the sheet. Fatigue crack growth resistance was measured as the length a crack propagates during each cycle at a given stress intensity range. The measurements were made with an R-ratio of 0.33 in the T-L orientation. It is readily seen that as the stress intensity factor increases, the extent of the improvement becomes more prominent.

**Claims**

1. A method of producing an aluminum base alloy sheet product comprising:

   (a) providing a body of an aluminum base alloy containing 4.0 to 4.5 wt.% Cu, 1.2 to 1.5 wt.% Mg, 0.4 to 0.6 wt.% Mn, 0.12 wt.% max. Fe, 0.1 wt.% max. Si, the remainder aluminum, optionally 0.2 wt.% max. Zn, 0.2 wt.% max. Cr, 0.5 wt.% max. Zr, and impurities;
   (b) hot rolling the body to a slab, the body or slab having a cladding of aluminum thereon;
   (c) heating said slab to a temperature within the range of 488 to 507°C (910 to 945°F) for a period from 1 to 40 hours to dissolve soluble constituents;
   (d) hot rolling the slab within a temperature range of 315 to 482°C (600 to 900°F) to a sheet product;
   (e) heating for solution heat treating within a temperature range of 488 to 507°C (910 to 945°F) for up to 60 minutes;
   (f) rapid cooling; and
   (g) aging to produce a sheet product having high strength and improved levels of fracture toughness and resistance to fatigue crack growth,

   wherein that sheet having a minimum long transverse yield strength of 275 MPa (40 ksi [thousand pounds per square inch]) and a minimum T-L fracture toughness of 154 MPa√m (140 ksi√in) measured using a 40 cm (16-inch) wide, 112 cm (44-inch) long panel.

2. The method in accordance with claim 1, wherein the body is hot rolled in a temperature range of 315 to 482°C. (600 to 900°F.) prior to said heating and/or the sheet product is cold rolled to a final sheet gauge such as 1.3 to 6.3 mm (0.05 to 0.25 inch) after said hot rolling.

3. The method in accordance with claim 1, wherein:

   Cu is 4.1 to 4.5 wt.%;
   Fe is 0.12 wt.% max; and/or
   Si is 0.1 wt.% max.

4. The method of any of the previous claims, wherein the body provided is a body of an aluminum base alloy containing 4.1 to 4.4 wt.% Cu, 1.2 to 1.45 wt.% Mg, 0.4 to 0.6 wt.% Mn, 0.12 wt.% max. Fe, 0.1 wt.% max. Si, the remainder aluminum and impurities.

5. The method in accordance with claim 4, wherein the sheet is naturally aged.

6. The method of any of the previous claims, wherein the cladding is one of the following:

   (i) it is of a higher purity aluminum alloy than said body:
   (ii) the cladding is of the Aluminum Association AA 1000 series;
   (iii) the cladding is of the Aluminum Association AA1100, 1200, 1230, 1135, 1235, 1435, 1145, 1345, 1250, 1350, 1170, 1175, 1180, 1185, 1285, 1188, 1199 or 7072.

**Patentansprüche**

1. Verfahren zur Herstellung eines Blechs aus einer Legierung auf Aluminiumbasis, umfassend die folgenden Schritte:

   (a) Bereitstellen eines Körpers aus einer Legierung auf Aluminiumbasis, die folgendes enthält: 4,0 bis 4,5 Gew.-% Cu, 1,2 bis 1,5 Gew.-% Mg, 0,4 bis 0,6 Gew.-% Mn, max. 0,12 Gew.-% Fe, max. 0,1 Gew.-% Si, Rest Aluminium, wahlweise max. 0,2 Gew.-% Zn, max. 0,2 Gew.-% Cr, max. 0,5 Gew.-% Zr, und Verunreinigungen;
   (b) Heißwalzen des Körpers zu einer Bramme, wobei auf dem Körper oder der Bramme eine Plattierung vorgesehen ist;
   (c) Erhitzen der Bramme auf eine Temperatur innerhalb des Bereichs von 488° bis 507°C (910° bis 945°F) für eine Dauer von 1 bis zu 40 Stunden, um lösliche Bestandteile zu lösen;
   (d) Heißwalzen der Bramme innerhalb eines Temperaturbereichs von 315° bis 482°C (600° bis 900°F) zu einem Blech;

(e) Erhitzen zum Lösungsglühen innerhalb eines Temperaturbereichs von 488° bis 507°C (910° bis 945°F) für bis zu 60 Minuten;

(f) schnelles Abkühlen; und

(g) Altern, um ein Blech mit einer hohen Festigkeit und einer verbesserten Bruchzähigkeit und Beständigkeit gegen das Entstehen von Ermüdungsrissen herzustellen, wobei des Blech eine Streckfestigkeit in Längs-/Querrichtung von mindestens 275 MPa (40 ksi [eintausend Pfund pro Quadratzoll]) und eine Bruchzähigkeit in Quer-/Längsrichtung von mindestens 154 MPa√m (140 ksi√in), gemessen an einer 40 cm (16 Zoll) breiten, 112 cm (44 Zoll) langen Platte, hat.

2. Verfahren nach Anspruch 1, bei dem der Körper vor dem Erhitzen in einem Temperaturbereich von 315 bis 482°C (600 bis 900°F) heißgewalzt wird, und/oder das Blech nach dem Heißwalzen zu einer endgültigen Blechstärke von beispielsweise 1,3 bis 6,3 mm (0,05 bis 0,25 Zoll) kaltgewalzt wird.

3. Verfahren nach Anspruch 1, bei dem:

Cu in einer Menge von 4,1 bis 4,5 Gew.-%;
Mg in einer Menge von 1,2 bis 1,45 Gew.-%;
Fe in einer Menge von max. 0,12 Gew.-%; und/oder
Si in einer Menge von max. 0,1 Gew.-%

enthalten ist.

4. Verfahren nach einem der vorhergehenden Ansprüche, bei dem der bereitgestellte Körper ein Körper aus einer Legierung auf Aluminiumbasis ist, die folgendes enthält:

4,1 bis 4,4 Gew.-% Cu, 1,2 bis 1,45 Gew.-% Mg, 0,4 bis 0,6 Gew.-% Mn, max. 0,12 Gew.-% Fe, max. 0,1 Gew.-% Si, Rest Aluminium und Verunreinigungen.

5. Verfahren nach Anspruch 4, bei dem das Blech natürlich gealtert wird.

6. Verfahren nach einem der vorhergehenden Ansprüche, bei dem die Plattierung eine der folgenden ist:

(i) sie besteht aus einer Aluminiumlegierung von höherer Reinheit als der Körper;
(ii) es handelt sich um eine Plattierung der Serie AA1000 der Aluminum Association;
(iii) es handelt sich um eine Plattierung der Serie AA1100, 1200, 1230, 1135, 1235, 1435, 1145, 1345, 1250, 1350, 1170, 1175, 1180, 1185, 1285, 1188, 1199 oder 7072 der Aluminum Association.

**Revendications**

1. Procédé de fabrication d'une tôle en alliage à base d'aluminium comprenant les étapes consistant à :

(a) prévoir un corps constitué d'un alliage à base d'aluminium contenant 4,0 à 4, 5 % en poids de Cu, 1,2 à 1,5 % en poids de Mg, 0,4 à 0,6 % en poids de Mn, 0,12 % en poids de Fe au maximum, 0,1 % en poids de Si au maximum, et le reste se composant d'aluminium, éventuellement de 0,2 % en poids de Zn au maximum, 0,2 % en poids de Cr au maximum, 0,5 % en poids de Zr au maximum et d'impuretés ;

(b) laminer à chaud afin d'obtenir un plateau, le corps ou plateau étant pourvu d'un revêtement en aluminium ;

(c) chauffer ledit plateau à une température comprise entre 488 et 507°C (910 à 945°F) pendant une période de 1 à 40 heures afin de dissoudre les composants solubles ;

(d) laminer à chaud le plateau dans une gamme de température allant de 315 à 482°C (600 à 900°F) afin d'obtenir une tôle ;

(e) chauffer par traitement à chaud en solution dans une gamme de température allant de 488 à 507°C (910 à 945°F) pendant plus de 60 minutes ;

(f) refroidir rapidement ; et

(g) faire vieillir afin de produire une tôle présentant une résistance élevée et des niveaux supérieurs de résistance à la rupture et de résistance à la croissance de fissures de fatigue,

dans lequel cette tôle présente une résistance minimale à l'allongement et au cisaillement de 275 MPa (40 ksi [milliers de livres par pouce carré] et une résistance à la rupture T-L minimale de 154 MPa √m (140 ksi √in) mesurées en utilisant un panneau large de 40 cm (16 pouces) et long de 112 cm (44 pouces).

2. Procédé selon la revendication 1, dans lequel le corps est laminé à chaud dans une gamme de température allant de 315 à 482°C (600 à 900°F) avant ledit réchauffement et/ou la tôle est laminée à froid afin d'obtenir un calibre d'épaisseur final compris entre 1,3 et 6,3 mm (0,05 à 0,25 pouce) après ledit laminage à chaud.

3. Procédé selon la revendication 1, dans lequel :

le pourcentage en poids de Cu est compris entre 4,1 et 4,5 ;
le pourcentage en poids de Mg est compris entre 1,2 et 1,45 ;
le pourcentage en poids de Fe est au maximum de 0,12 ; et/ou
le pourcentage en poids de Si est au maximum de 0,1.

4. Procédé selon l'un quelconque des revendications précédentes, dans lequel le corps fourni est un corps constitué d'un alliage à base d'aluminium contenant de 4,1 à 4,4 % en poids de Cu, de 1,2 à 1,45% en poids dé Mg, de 0,4 à 0,6% en poids de Mn, 0,12 % en poids de Fe au maximum, 0,1 % en poids de Si au maximum, le reste se composant d'aluminium et d'impuretés.

5. Procédé selon la revendication 4, dans lequel la tôle est naturellement vieillie.

6. Procédé selon l'une quelconque des revendications précédentes, dans lequel le revêtement est l'un des suivants :

(i) il s'agit d'un alliage d'aluminium d'une pureté supérieure à celle dudit corps ;
(ii) le revêtement est de la série 1000 de l'Aluminium Association AA.
(iii) le revêtement est le AA1100, 1200, 1230, 1135, 1235, 1435, 1145, 1345, 1250, 1350, 1170, 1175, 1180, 1185, 1285, 1188, 1199 ou le 7072 de l'Aluminium Association.

STRENGTH VERSUS TOUGHNESS PLOT
FOR NEW PRODUCT AND 2024-T3

FIG. I

FATIQUE CRACK GROWTH RATE VS CRACK LENGTH
FOR 2024-T3 AND THE IMPROVED PRODUCT
$\Delta K$ 22 ksi$\sqrt{in}$, R=0.33, T-L ORIENTATION

FIG. 2

2024-T3:
WT. – 45.40 mg
SCAN RATE – 20.00 deg/min

PEAK FROM 504.88 TO 523.6
ONSET – 510.37
CAL./GRAM – 1.74

PEAK FROM 560.96 TO 578.94
ONSET – 564.37
CAL./GRAM – 0.6

MAX:
515.51

MAX:
570.83

FIG. 3

NEW PRODUCT:
WT. – 45.40 mg
SCAN RATE – 20.00 deg/min

PEAK FROM 503.38 TO 534.82
ONSET – 508.46
CAL./GRAM – 0.72

MAX:
510.89

FIG. 4